Europäisches Patentamt

European Patent Office

Office européen des brevets

(19)

(11) Veröffentlichungsnummer: **0 230 082**
**B1**

# EUROPÄISCHE PATENTSCHRIFT

(12)

(45) Veröffentlichungstag der Patentschrift:
**25.07.90**

(21) Anmeldenummer: **86202361.1**

(22) Anmeldetag: **22.12.86**

(51) Int. Cl.⁵: **B23K 35/32**, B23K 35/00,
B23K 35/14

(54) **Verfahren zur Herstellung mehrkomponentiger, kongruent erschmelzender Lotmaterialien.**

(30) Priorität: **23.12.85  AT 3722/85**

(43) Veröffentlichungstag der Anmeldung:
**29.07.87 Patentblatt 87/31**

(45) Bekanntmachung des Hinweises auf die Patenterteilung:
**25.07.90 Patentblatt 90/30**

(84) Benannte Vertragsstaaten:
**BE CH DE ES FR GB IT LI NL SE**

(56) Entgegenhaltungen:
**BE-A- 564 877**
**DE-A- 1 289 395**
**DE-A- 1 483 315**
**DE-A- 1 913 987**
**DE-A- 2 342 774**
**DE-A- 2 540 755**
**DE-A- 2 813 166**
**FR-A- 2 300 650**
**GB-A- 2 016 985**

**WELDING RESEARCH SUPPLEMENT TO THE WELDING JOURNAL, Band 43, Nr. 9, September 1964, Seiten 385s-392s, Miami, US; A.H. FREEDMAN et al.: "Brazing of columbium D36 honeycomb structures" PATENT ABSTRACTS OF JAPAN, Band 9, Nr. 84 (M-371)[1807], 13. April 1985; &**

(73) Patentinhaber: **METALLWERK PLANSEE GESELLSCHAFT M.B.H., A-6600 Reutte, Tirol(AT)**

(72) Erfinder: **Rödhammer, Peter, Dr., Dr. Robert Thyll-Strasse 1, A-6600 Reutte(AT)**
Erfinder: **Kneringer, Günther, Dr., Kaiser-Lothar-Strasse 40, A-6600 Reutte(AT)**

(74) Vertreter: **Lohnert, Wolfgang, Dr., Metallwerk Plansee GmbH, A-6600 Reutte, Tirol(AT)**

(56) Entgegenhaltungen: (Fortsetzung)
**JP-A-59 212 188 (HITACHI SEISAKUSHO K.K.) 01-12-1984**

## Beschreibung

Die Erfindung betrifft ein Verfahren zur Herstellung eines mehrkomponentigen, kongruent erschmelzenden Lotmaterials, bei dem ein Formteil, das eine Lötfolie oder -draht oder aber eines der beiden zu verlötenden Teile selbst sein kann, aus einer ersten Komponente des Lotmaterials mit einer oder mehreren weiteren Komponenten derart beschichtet wird, daß das Lotmaterial beim späteren Lötvorgang in eine homogene Phase von eutektischer Zusammensetzung mit einem Anteil einer spröden Phase übergeht.

Im Bereich anspruchsvoller Technologien spielen Werkstoffverbunde eine immer größer werdende Rolle. Die Löttechnik erhält dabei eine Schlüsselstellung. Neben anderen werden derzeit eine Vielzahl von kongruent, insbesondere eutektisch erschmelzenden Metallegierungen als Lotmaterial eingesetzt. Während sich beispielsweise Weichlote auf Sn-Basis oder Hartlote auf Ag-Basis schmelzmetallurgisch herstellen und durch Verformung in die gewünschte Gestalt bringen lassen, ist dies bei anderen Lotmaterialien mit eutektischer Zusammensetzung, welche spröde, intermetallische Phasen enthalten, in der Regel nicht möglich. Beispiele für Lotmaterialien dieser Gruppe sind solche auf der Basis von hochschmelzenden Übergangsmetallen wie Titan, Zirkon, Molbdän und Wolfram. Darum wird nach dem heutigen Stand der Technik im Bereich der Hochtemperaturlötungen weitaus überwiegend mit einkomponentigen Loten (Titan, Zirkon, Edelmetalle wie Platin und Rhodium) gelötet.

Es hat nicht an Versuchen gefehlt, eutektisch erschmelzende, unter normalen Verhältnissen spröde Lotmaterialien als verformbare Drähte und Folien herzustellen. Beispielsweise werden bei der Herstellung derartige Lotmaterialien in eutektischer Zusammensetzung vorliegende Schmelzen durch sehr rasches Abkühlen in den Zustand metallischer Gläser gebracht und sind in diesem Zustand verformbar. Doch ist dieses Verfahren teuer und außerdem derzeit auf Lotfolien mit Abmessungen von nur wenigen Zentimetern Breite beschränkt. Beispiele derartiger Lotfolien sind in der DE 27 55 435 und in der US 3 856 513 beschrieben.

Ein bekanntes Verfahren zur Aufbringung mehrkomponentiger Lotmaterialien auf Lötflächen besteht darin, das Lotmaterial in Form räumlich nebeneinander vorliegender Komponenten auf die zu verlötende Fläche zu bringen. Beispielsweise beschreibt die DE-OS 33 21 438 ein Lot, das in heterogener Phase, nämlich in Form verschieden übereinandergeschichteter Pulver auf die zu verlötende Fläche aufgebracht wird.

Entsprechend lassen sich mehrkomponentige Lotmaterialien auch in Form von geschichteten Blechen aus jeweils einer Komponente auf die zu verlötende Fläche aufbringen.

Selbst wenn ein derart aus mehreren verschiedenen, räumlich getrennten Komponenten zusammengesetztes Lotmaterial in seiner Gesamtheit eutektische Zusammensetzung besitzt, so muß zur Einleitung des Loterschmelzens zunächst zumindest angenähert die Schmelztemperatur der niedrigstschmelzenden Komponente erreicht werden, welche nach Definition oberhalb, häufig sogar weit oberhalb der eutektischen Temperatur, d. h. der Erstarrungstemperatur des Eutektikums liegt. Zudem erfolgt das Erschmelzen in der Praxis an verschiedenen Orten der Lötfläche zu unterschiedlichen Zeitpunkten. Für das Verlöten von Teilen gilt aber ganz allgemein, einerseits die Löttemperatur so niedrig und die Lötzeit so kurz wie möglich zu halten, um nachteilige Material- und Maßveränderungen der Teile zu vermieden oder doch in tolerierbaren Grenzen zu halten, und andererseits ein gleichzeitiges Erschmelzen in allen Bereichen der Lötfläche zu gewährleisten.

Ist zur Einleitung des Erschmelzens eine wesentlich über der eutektischen Temperatur liegende Temperatur erforderlich, so kommt es beim Abkühlen zu starker Ausbildung von primären Mischkristallen im Lotmaterial, was dessen mechanische Eigenschaften infolge Versprödung sehr beeinträchtigt.

Aus diesem Grund scheidet in der Praxis die Verwendung übereinander geschichteter Lötmaterialien mit insgesamt eutektischer Zusammensetzung zum Verbinden zweier Teile häufig aus.

Die DE-OS 25 40 755 beschreibt ein Verfahren zum Verlöten von zwei Teilen aus Zirkonlegierungen durch Aufbringen eines Metallüberzuges auf eines der beiden Teile. Dabei soll der Überzug zusammen mit der Zirkonlegierung bei entsprechender Erwärmung eine Schmelze eutektischer Zusammensetzung bilden. Mittels verschiedener Verfahrensschritte wird schließlich eine Lötverbindung zwischen den zu verbindenden Zirkonteilen geschaffen. Aufgabe jenes Verfahrens ist es, die Umwandlung der Zirkonlegierung eines der beiden zu verbindenden Teile von der Alpha- in die nicht tolerierbare Beta-Phase zu vermeiden. Diese Vorveröffentlichung enthält darüberhinaus keine auf die Lotherstellung ausgerichteten Angaben.

Die Verfahrensbeschreibung läßt vielmehr nicht erwarten, daß entsprechend der dort unter Schutz gestellten Folge von Verfahrensschritten für das Verbinden der Teile, abgesehen von der Vermeidung der Betaphasenbildung, von der tatsächlichen Löttemperatur ausgehend irgendwelche Vorteile erzielbar sind, bzw. praktisch erhalten werden.

Aufgabe der vorliegenden Erfindung ist die Herstellung zwei- oder mehrkomponentiger, bei deren eutektischen Temperatur kongruent erschmelzender Lote, auch in handelsüblichen Formen und Abmessungen, in Fällen, in denen ein entsprechendes homogenes Lotmaterial eutektischer Zusammensetzung wegen Anteilen einer spröden intermetallischen Phase nicht im für Lote gewohnten Maße handhabbar ist. Das Verfahren soll die oben genannten Einschränkungen schmelzmetallurgischer Verfahren nicht aufweisen. Das Verfahren soll die oben beschriebenen Nachteile nicht aufweisen, welche beim losen Aneinanderfügen der Lotkomponenten auftreten. Die Aufgabe besteht in einzelnen Anwendungsfällen weiters darin, das Verlöten von Teilen mit kompliziert geformter Lötfläche mittels eutektisch erschmelzenden Lotmaterialien zu ermöglichen.

Die Aufgabe wird erfindungsgemäß dadurch gelöst, daß das Formteil in eine Beschichtungseinrichtung eingebracht und in einem ersten Verfahrensschritt mittels an sich bekannter, dem jeweiligen Beschichtungsprozeß spezifischer Maßnahmen von etwaigen, an der Oberfläche anhaftenden Oxidschichten und/oder Verunreinigungen befreit wird, daß in einem zweiten Verfahrensschritt das Formteil mit einer oder mehreren weiteren Komponenten beschichtet wird und daß in einem letzten Verfahrensschritt in einer Grenzzone des beschichteten Formteiles sämtliche Komponenten bei Temperaturen unterhalb der eutektischen Temperatur derart mechanisch und/oder durch Diffusion vermischt werden, daß die Mischung in einer Grenzschicht eutektische oder annähernd eutektisches Gefüge erhält, wodurch vor dem eigentlichen Lötprozeß ein Phasenzustand im Lot geschaffen wird, der bewirkt, daß beim darauffolgenden Lötvorgang das gesamte Lotmaterial bei einer Temperatur unmittelbar oberhalb der eutektischen Temperatur verzögerungsfrei erschmilzt.

Vorzugsweise kann dabei der letzte Verfahrensschritt gleichzeitig mit dem zweiten Schritt erfolgen.

Durch das erfindungsgemäße Verfahren wird überraschenderweise erreicht, daß auch bei einem schichtweisen Aufbringen der Lotkomponenten bereits vor dem eigentlichen Lötprozeß ein Phasenstand im Lot geschaffen wird, der ein Erschmelzen des Lotes bei der eutektischen Temperatur ermöglicht und nicht, wie bisher üblich, erst bei oder in der Nähe der Schmelztemperatur der niedrigstschmelzenden Komponenten des Lotmaterials. die Schmelztemperatur liegt in der Regel wesentlich über der Eutektikum-Temperatur.

Dabei hat sich gezeigt, daß zur Erzielung der Grenzschicht eutektischer Zusammensetzung eine zwischen zwei getrennt vorliegenden Komponenten A und B befindliche, im Prinzip beliebig schmale Zone genügt, innerhalb der ein kontinuierlicher Konzentrationsgradient der Atome des Elementes A von 0 auf 100 % (und analog für Atome des Elementes B) gegeben ist.

Die sich beim Erreichen der eutektischen Temperatur in der Grenzschicht ausbildende Schmelze sorgt durch den darin gegebenen hohen Austausch von Atomen für eine rasche Ausweitung der Schmelzzone und damit für ein unter praktischen Lötbedingungen kongruentes Erschmelzen des in Summe in eutektischer Zusammensetzung vorgegebenen Lotmaterials bereits wenige Grade oberhalb der eutektischen Temperatur.

Die praktische Durchführung der Erfindung wird demgemäß durch alle jene bekannte Verfahren und Einrichtungen der Beschichtungs- bzw. Verbindungstechnik erreicht, die bei geeigneter Prozeßführung zusätzlich zum Beschichten eine innige Verbindung der Komponenten A und B mit dem oben angeführten gradierten Übergang ermöglichen. Gleichzeitig müssen durch das Verfahren - soweit vorhanden - Oberflächenkontaminationen, Oxidschichten und Korrosionsprodukte von der Oberfläche der zu beschichtenden Komponente entfernt, bzw. die schichtförmige Anlagerung derselben auf der Oberfläche soweit durchbrochen werden, daß eine Durchmischung der Komponenten A und B zumindest in einem überwiegenden Anteil der Grenzfläche zwischen den Komponenten stattfinden kann.

Bei den mit derart aufgebauten Lötmaterialien erfolgenden Lötprozessen kann ein sehr feinkörniges eutektisches Gefüge mit minimaler primärer Mischkristallbildung und entsprechend guten Festigkeitseigenschaften erzielt werden.

Entscheidend für diese Gefügeausbildung ist die Vermeidung der Überhitzung des Lotes und damit die Gewährleistung eines ausreichend schnellen Durchlaufens der eutektischen Temperatur.

Nach Abschalten der Wärmequelle sinkt die Temperatur angenähert exponentiell ab. Je näher der Abkühlungsprozeß nun oberhalb der eutektischen Temperatur einsetzt, desto schneller wird unter sonst gleichen Prozeßbedingungen der kritische Temperaturbereich um die eutektische Temperatur durchlaufen und desto stärker ist der Unterkühlungseffekt der Schmelze mit dem Ergebnis feinkörniger Mischkristallbildung.

Als dieser Bedingung in besonders hohem Maße genügende Verfahren haben sich solche der plasmaunterstützen Dampfabscheidung (PVD-Verfahren) bewährt. Die zu dieser Gruppe gehörenden Verfahren des Ionenplattierens und des Hochleistungszerstäubens mit Substratvorspannung erlauben das erfindungsgemäße Aufbringen von Schichten beliebiger Schichtmaterialien bereits bei vergleichsweise niedrigen Temperaturen (bis zu einigen 100 °C).

Am Beginn der Beschichtung wird durch Ionenstöße die Oberfläche von anhaftenden Verunreinigungen befreit (abgestäubt) und im Grenzbereich zwischen Trägermaterial und Schichtwerkstoff eine durchmischte Zone der Komponenten A und B des eutektischen Lotmaterials gebildet. Wird dann beim Lötvorgang während des Aufheizens die eutektische Temperatur erreicht, so erschmilzt praktisch ohne Verzögerung derjenige Bereich der Übergangszone, welcher die eutektische Zusammensetzung aufweist. An den beiden Phasengrenzen fest/flüssig erschmelzen bei konstanter Löttemperatur, welche in der Praxis ab etwa 10 °C oberhalb der eutektischen Temperatur gewählt werden kann, weitere Anteile der festen Materialkomponenten. Dabei bleibt wegen des hohen Materialaustausches in der Schmelze die eutektische Zusammensetzung erhalten. Der Schmelzprozeß kommt zum Stillstand, wenn sich das Konzentrationsgleichgewicht in der Schmelze entsprechend dem Zustandsdiagramm eingestellt hat. Eine Lötfolie, die in einem der eutektischen Zusammensetzung entsprechenden Dickenverhältnis vorgelegen war, erschmilzt vollständig.

Die genannten PVD-Verfahren haben gegenüber anderen Beschichtungsverfahren, wie z. B. dem Vakuumbedampfen oder der galvanischen Beschichtung, den bedeutenden Vorteil, daß unmittelbar vor Beschichtungsbeginn in der Beschichtungsanlage die Oberfläche der in fester Form vorliegenden Komponente durch Ioneneinwirkung abgestäubt werden kann, so daß eine kontaminations- und oxidfreie Oberfläche entsteht, und in weiterer Folge in der Grenzzone eine Durchmischung der Komponenten erfolgt.

Bei Verwendung von CVD-Verfahren erfolgt die Ausbildung der Grenzzone zwischen fester Komponente A und dem Beschichtungsmaterial B aufgrund der höheren Prozeßtemperaturen ausschließlich durch thermische Diffusion, wobei Oberflächenverunreinigungen und Oxide bei bestimmten Materialien durch vorhergehendes Glühen im $H_2$-Strom abgebaut werden können. Die typischen Prozeßtemperaturen liegen nach dem Stand der Technik zwischen 600 °C und 1100 °C; sie müssen jedenfalls so gewählt werden, daß die eutektische Temperatur nicht erreicht wird.

Auch durch Walzplattieren läßt sich die Erfindung verwirklichen. Allerdings sind hier zusätzliche Randbedingungen durch die erforderliche Abstimmung der mechanischen Eigenschaften der Lotkomponenten aufeinander gegeben. Die durch das Walzplattieren zu verbindenden Oberflächen müssen möglichst kurz vor dem Plattieren von Rückständen, Oxidschichten und dergleichen durch entsprechende mechanische und chemische Vorbehandlung gesäubert werden. Die sich bei Verarbeitung an Luft in der Regel rasch wieder ausbildende dünne Oxidschicht wird durch die Verformung des Materials beim Walzplattieren unter Voraussetzungen, wie sie für das Druck- bzw. Reibschweißen von Metallen bekannt und wesentlich sind, aufgerissen, so daß sich infolge der Kaltverschweißung der Materialien A und B wiederum eine im mikroskopischen Maßstab durchmischte Übergangszone ausbilden kann.

Das Walzen kann je nach verwendeten Materialien sowohl bei Raumtemperatur als auch bei erhöhten Temperaturen erfolgen. Bei kaltwalzbaren Blechen kann durch eine nachfolgende Glühung bei Temperaturen unterhalb der eutektischen Temperatur $T_E$ (typisch bei 0.5 - 0,7 $T_E$) durch thermische Diffusion der erforderliche Konzentrationsgradient über die gesamte Grenzfläche hergestellt und damit das Schmelzverhalten optimiert werden.

Auch diejenigen Beschichtungsverfahren, die nicht zur Durchmischung der Lotkomponenten in der Grenzschicht führen, lassen sich zur erfindungsgemäßen Herstellung von eutektisch erschmelzenden Loten einsetzen, sofern durch eine der Beschichtung nachgeschaltete Wärmebehandlung eine thermisch aktivierte Diffusion der Komponenten ineinander erzielt wird. Dies ist z.B. im Falle des Vakuumbedampfens und des galvanischen Beschichtens grundsätzlich möglich, jedoch weniger praktikabel.

Das erfindungsgemäße Verfahren eignet sich insbesondere zur Herstellung von eutektisch erschmelzendem Lotmaterial, bei dem die erste Komponente des Lotmaterials ein dünnes Blech ist, auf welches eine, oder ein Gemisch von mehreren Metallkomponenten entsprechend dem erfinderischen Verfahren aufgetragen werden.

Durch Abstimmung von Blechdicke und aufgetragener Schicht läßt sich erreichen, daß das Lotmaterial insgesamt eine Materialzusammensetzung erhält, welche dem Verhältnis der einzelnen Metallkomponenten in dem entsprechenden Eutektikum entspricht. Beim Löten mit solchen Lötfolien erschmilzt beim Überschreiten der eutektischen Temperatur in kürzester Zeit das gesamte Lotmaterial mit eutektischer Schmelzzusammensetzung und kristiallisiert bei der nachfolgenden Abkühlung mit eutektischem Gefüge aus.

Die bei handelsüblichen Lötfolien mit Stärken bis zu 0.1 mm aufzutragenden Schichtstärken liegen je nach Zusammensetzung des Eutektikums meist im Bereich unter 100 µm. Bei großen Unterschieden in der Dicke der Komponenten A und B wird in der Regel die dünnere Lage als Beschichtung auf die als Trägerblech dienende dickere Komponente aufgebracht werden. Schichtstärken bis zu einigen 100 µm können sowohl mittels PVD- und CVD-Verfahren als auch durch Walzplattieren nach dem Stand der Technik wirtschaftlich aufgebracht werden.

Die Qualität der mittels dem erfindungsgemäßen Lotmaterial hergestellten Lötverbindung ist nicht von derjenigen unterscheidbar, die mit Hilfe eines Lotes mit bereits im vorhinein hergestellter eutektischer Zusammensetzung und eutektischem Gefüge erreicht wird.

Nach dem Stand der Beschichtungstechnik besteht die Möglichkeit, das Beschichtungsmaterial B einseitig, aber auch beidseitig auf das Trägermaterial A aufzubringen. Dadurch wird die Formstabilität des Verbundes beim Aufheizen erhöht. Die beidseitige Beschichtung ist insbesondere beim Walzplattieren verfahrenstechnisch einfach aufzubringen. Auch Beschichtungen mit mehr als einem Schichtmaterial zur Herstellung ternärer Eutektika (bzw. quaternärer etc.) sind technisch beherrscht.

Viele Beschichtungsverfahren sind nach dem Stand der Technik für kontinuierliche Band- oder Drahtbeschichtung adaptiert; entsprechend lassen sich z. B. Bänder bis zur Breite von 1 - 2 Metern im Umspulverfahren beschichten. Bei größenmäßiger Beschränkung durch einen bestimmten Beschichtungs-Anlagentyp ist in bestimmten Grenzen auch ein nachträgliches Auswalzen von erfindungsgemäßen Lotmaterialien - anfangs kleinerer Fläche, jedoch entsprechend größere Stärke - auf die für eine Lötfolie gewünschten Dicke möglich.

Das Verfahren hat sich sehr gut bewährt beim Verbinden zweier Formteile, welche kompliziert ausgestaltete Lötflächen besitzen. Bei nicht vollständig ebenen Lötflächen ist es bekanntlich sehr schwierig, Lötfolien gleichmäßig auf eines der zu verlötenden Werkstücke aufzubringen und eine Verlötung mit homogener Lötstärke über die gesamte Lötfläche herzustellen. Im Unterschied dazu lassen sich auf Formteile, welche aus der ersten Komponente des Lötmaterials bestehen, mittels verschiedener Beschichtungstechniken eine oder mehrere weitere Komponenten mit weitgehend gleichmäßiger, jedenfalls aber entsprechend dem jeweiligen Beschichtungsverfahren vorher bestimmbarer Schichtdicke auftragen und das erste Teil mit dem zweiten Formteil unter Ausschaltung der für Lötfolien genannten Nachteile verlöten. Beim Löten setzt der eutektische Schmelzprozeß in der Grenzschicht zwischen Formteil und aufgetragener Lotkomponente ein. Danach folgt praktisch verzögerungsfrei über die gesamte Lötfläche hinweg das Erschmelzen der aufgetragenen Lotkomponente unter gleichzeitiger Anlösung des Werkstoffes des Formteiles. Die eutektische Zusammensetzung der Schmelze bleibt stets erhalten. Dadurch ergibt sich ein gleichmäßiger, im vorhinein kalkulierbarer Abtrag des Formteils (im Bereich von typisch kleiner 0,1 mm), eine weitestgehend gleichmäßige Lotstärkenverteilung und insgesamt eine enge maßliche Toleranz des Formteilverbundes.

Wie eingangs erwähnt, haben besonders Hochtemperaturlote in den letzten Jahren zunehmend an Bedeutung gewonnen, wobei Formteile wiederum aus hochschmelzenden Werkstoffen, insbesondere auch aus Übergangsmetallen, durch Löten zu verbinden sind. In diesen Fällen kommen die Vorteile der erfindungsgemäßen eutektischen Lotmaterialien, insbesondere gegenüber den bis heute verwendeten einkomponentigen Loten sehr ausgeprägt zum Tragen. Das erfinderische Verfahren hat sich danach besonders zur Herstellung kongruent erschmelzender Zweilagenlote, bestehend aus Kombinationen der Übergangsmetalle Ti, Zr, Hf, V, Nb, Ta, Cr, Mo und W, untereinander bzw. mit einem oder mehreren der Edelmetalle Ag, Au, Ru, Rh, Pd, OS, Ir, Pt oder den Eisenmetallen Fe, Ni und Co bewährt.

In der Tabelle nach Figur 1 sind beispielhaft einige derartige Lotmaterialien mit den jeweiligen eutektischen Zusammensetzungen und eutektischen Temperaturen angeführt. Zum Vergleich sind auch die Schmelzpunkte der jeweiligen Hauptkomponenten des Lotes angegeben. Alleine aus den jeweiligen Temperaturdifferenzen, die in den genannten Beispielen bis zu 350 °C betragen, ist der verfahrenstechnische Vorteil der eutektisch schmelzenden Lote klar erkennbar. Für das Verlöten anderer, nicht oder nur schwach mit den Lotmaterialien legierender Werkstoffe, bilden diese Lote sowohl in Bezug auf Lotmaterial als auch auf Löttemperatur eine wesentliche Erweiterung der derzeit verfügbaren Lotmaterialien.

Unter den eutektischen Loten der hochschmelzenden Übergangsmetalle hat das blechförmige Lotmaterial der Zusammensetzung Zr 0,71, Mo 0,29 zum Verbinden von Formteilen aus Molybdän bzw. Molybdänlegierungen untereinander oder mit Graphit besondere Bedeutung erlangt.

Die praktische Durchführung des erfindungsgemäßen Verfahrens wird anhand des nachfolgenden Beispieles näher erläutert.

## Beispiel 1

Ein Zirkoniumblech der Stärke 0,1 mm und der Größe 500 × 200 mm² wird in eine PVD-Ionenplattieranlage derart eingebaut, daß die Bleche plan vorgespannt und gegenüber der Wand der Vakuumkammer kathodisch geschaltet sind. In der Kammer wird zunächst Hochvakuum erzeugt (p kleiner $10^{-3}$ Pa); dann wird bei einem Argondruck von 1 Pa durch Anlegen einer Hochspannung von einigen kV an das Zirkoniumblech eine Glimmentladung gezündet. In der Glimmentladung wird das Zirkoniumblech durch Ionenangriff (Abstäuben) von oberflächlichen Verunreinigungen und der stets anzutreffenden Oxidschicht befreit. Dann erfolgt unter Aufrechterhaltung der Glimmentladung das Ionenplattieren von Molybdän auf das Zirkoniumblech mittels Elektronenstrahl-Verdampfen von Molybdän aus einem wassergekühlten Tiegel. Die Molybdän-Beschichtung erfolgt bis zu einer Schichtdicke von 27 µm, wodurch der Verbund Zirkonium/Molybdän in hinreichender Näherung die eutektische Zusammensetzung erhält.

Die so erzeugten Folien lassen sich nach der Beschichtung auf einem Radius von 1 mm um 180 ° biegen, ohne zu brechen. Die Schichthaftung ist vorzüglich; bei der Biegung kommt es zu keinerlei Absplitterungen. Das Gefüge der Beschichtung ist porenfrei und feinstengelig. Ein gradierter Übergang von ca. 50 nm Breite in der Übergangszone zwischen Grundmaterial und Beschichtung konnte mittels Auger-Elektronenmikroskopie nachgewiesen werden.

Die Lötfolien wurden zum Löten von Formteilen aus Molybdän mit solchen aus Graphit, sowie von Graphit mit Graphit verwendet. Die eutektische Temperatur der Molybdän/Zirkonium-Legierung wird in der Literatur mit 1510 bis 1520 °C angegeben. Bei dem Lötversuch wurde das Lötgut mit hoher Aufheizgeschwindigkeit (ca. 50 °C pro Minute) auf eine Temperatur von 1530 °C gebracht. Bei Erreichen der Löttemperatur wurde die Heizung abgeschaltet und die Kammer mit Helium geflutet, um eine rasche Abkühlung zu erreichen. Die gesamte Verweildauer des Lötgutes oberhalb der eutektischen Temperatur betrug aufgrund dieser Maßnahme weniger als eine Minute.

Metallurgische Untersuchungen der Lotschicht im Anschluß an die Lötung bestätigten, daß die Folie vollständig erschmolzen und das Lot feinkristallin mit eutektischem Gefüge erstarrt ist. Sowohl die Benetzung der Oberflächen der zu verlötenden Teile als auch die erreichte mechanische Stabilität der Lötverbindung hinsichtlich Zug-, Scher- und Biegebeanspruchung übertrafen die bei Verwendung eines reinen Metall-Lotes erhaltenen Werte.

Beispiel 2

Ein dünnwandiges Molybdänrohr wurde im Bereich der vorgesehenen Lötzone mittels Ionenplattieren mit Rhodium (Schichtstärke 25 µm) beschichtet. Beim Einlöten des Rohres in eine Bohrung erschmolz das Lot verzögerungsfrei bei 1940 °C unter gleichmäßiger, unkritischer Anlegierung der Rohrwandung zur Einstellung der eutektischen Schmelze. Ein lokaler, starker Angriff der Wandung des Molybdän-Rohres, wie er zuvor bei standardmäßigem Lötverfahren mit beigelegtem Rhodium-Draht erfolgt war, konnte dadurch vollkommen vermieden werden.

Beispiel 3

Ein eutektisch erschmelzendes Lot Mo-Ni wurde durch Walzplattieren eines symmetrischen Blech-Paketes Ni-Mo-Ni mit insgesamt stöchiometrischem Verhältnis (15 µm Ni - 100 µm Mo - 15 µm Ni) hergestellt. Die Blech-Pakete wurden in gekanntem (hermetisch versiegeltem) Zustand bei Temperaturen von etwa 1000 °C warmgewalzt, wobei durch druckunterstützte Diffusion eine ausgezeichnete Verbindung zwischen den Nickelblechen und dem Molybdän erzielt und gleichzeitig der für das eutektische Erschmelzen notwendige Konzentrationsgradient aufgebaut wurden. Die so erhaltene Lötfolie von ca. 0,1 mm Stärke wurde zum Verlöten von Formteilen aus Molybdän bei einer Löttemperatur von 1350 °C eingesetzt. Auch hier setzte der Schmelzprozeß praktisch verzögerungsfrei und überall gleichzeitig bei ca. 1320 °C ein.

FIGUR 1: Eutektisch erschmelzende Hochtemperaturlote mit spröder intermetallischer Phase

| Komponenten | Eutektische Temperatur (°C) | Schmelztemperatur der Hauptkomponente (°C) |
|---|---|---|
| Zr-Mo* | 1520 | 1850 |
| Ni-Mo | 1320 | 1450 |
| Cr-Ti | 1408 | 1875 |
| Zr-Re | 1593 | 1850 |
| Cr-Ru | 1610 | 1875 |
| Zr-W | 1795 | 1850 |
| Rh-Mo | 1940 | 1966 |
| Ru-Mo | 1945 | 2500 |
| Zr-(W/Mo) | 1520–1795 | 1850 |

* Hauptkomponente des Lotes unterstrichen

**Patentansprüche**

1. Verfahren zur Herstellung eines mehrkomponentigen, kongruent erschmelzenden Lotmaterials, bei dem ein Formteil, das eine Lötfolie oder -draht oder aber eines der beiden zu verlötenden Teile selbst sein kann, aus einer ersten Komponente des Lotmaterials mit einer oder mehreren weiteren Komponenten derart beschichtet wird, daß das Lotmaterial beim späteren Lötvorgang in eine homogene Phase von eutektischer Zusammensetzung mit einem Anteil einer spröden Phase übergeht, dadurch gekennzeichnet, daß das Formteil in eine Beschichtungseinrichtung eingebracht und in einem ersten Verfahrensschritt mittels an sich bekannter, dem jeweiligen Beschichtungsprozeß spezifischer Maßnahmen von etwaigen, an der Oberfläche anhaftenden Oxidschichten und/oder Verunreinigungen befreit wird, daß in einem zweiten Verfahrensschritt das Formteil mit einer oder mehreren weiteren Komponenten beschichtet wird und daß in einem letzten Verfahrensschritt in einer Grenzzone des beschichteten Formteiles sämtliche Komponenten bei Temperaturen unterhalb der eutektischen Temperatur derart mechanisch und/oder durch Diffusion vermischt werden, daß die Mischung in einer Grenzsrhicht eutektisches oder annähernd eutektisches Gefüge erhält, wodurch vor dem eigentlichen Lötprozeß ein Phasenzustand im Lot geschaffen wird, der bewirkt, daß beim darauffolgenden Lötvorgang das gesamte Lotmaterial bei einer Temperatur unmittelbar oberhalb der eutektischen Temperatur verzögerungsfrei erschmilzt.

2. Verfahren nach Anspruch 1, dadurch gekennzeichnet, daß der Zweite Verfahrenschritt gleichzeitig mit dem letzten erfolgt.

3. Verfahren zur Herstellung eines Lotmaterials nach Anspruch 1 oder 2, dadurch gekennzeichnet, daß die Beschichtung mittels des Ionenplattierens erfolgt und die Komponenten mittels Ionenbeschuß in der Grenzzone vermischt werden.

4. Verfahren zur Herstellung eines Lotmaterials nach Anspruch 1 oder 2, dadurch gekennzeichnet, daß die Beschichtung mittels Hochleistungszerstäubung bei unterschiedlichem elektrischen Potential zwischen Quelle und zu beschichtendem Körper erfolgt.

5. Verfahren zur Herstellung eines Lotmaterials nach Anspruch 1, dadurch gekennzeichnet, daß die Beschichtung mittels CVD-Verfahren unter Ausbildung einer Interdiffusionszone im Oberflächenbereich erfolgt.

6. Verfahren zur Herstellung eines Lotmaterials nach einem der Ansprüche 1–5, dadurch gekennzeichnet, daß eines von zwei miteinander zu verbindenden Formteilen, insbesondere von Formteilen mit kompliziert gestalteter Lötfläche, aus einem Werkstoff entsprechend der ersten Komponente des Lotmaterials besteht, die mit einer oder mehreren weiteren Komponenten beschichtet wird.

7. Verfahren zur Herstellung eines Lotmaterials nach Anspruch 1–6 dadurch gekennzeichnet, daß als Komponenten des Lotmaterials die Übergangsmetalle Ti, Zr, Hf, V, Nb, Ta, Cr, Mo und Wolfram untereinander, oder einzelne oder mehrere dieser Metalle mit einzelnen oder mehreren der Edelmetalle Ag, Au, Ru, Rh, Pd, Os, Ir und/oder Pt und/oder den Eisenmetallen Fe, Ni und Co, verwendet werden.

8. Lotmaterial nach einem der Ansprüche 1–6 dadurch gekennzeichnet, daß die erste Komponente des Lotmaterials aus Zirkonium, die zweite Komponente aus Molybdän besteht und die beiden Komponenten im Gewichtsverhältnis 71/29 vorliegen.

9. Lotmaterial nach Anspruch 1–5 und 7–8, dadurch gekennzeichnet, daß die erste Komponente des Lotmaterials eine dünne, selbsttragende und duktile Folie ist und die Anteile aller Komponenten im Lotmaterial in Summe der eutektischen Zusammensetzung entsprechen.

## Revendications

1. Procédé de fabrication d'une matière de brasure composite, à fusion congruente, dans lequel une préforme, qui peut être une feuille ou un fil de brasure mais aussi l'une des deux pièces à braser elle-même, est revêtue d'un premier composant de la matière de brasure comprenant un ou plusieurs autres composants, de telle façon que la matière de brasure, lors d'un processus de brasage ultérieur, se transforme en une phase homogène de composition eutectique avec une partie d'une phase cassante, caractérisé en ce que la préforme est appliquée dans un dispositif de revêtement, et qu'elle est, au cours d'une première étape du procédé, libérée de couches d'oxyde et/ou d'impuretés éventuelles adhérents à sa surface, au moyen de méthodes connues, spécifiques au processus respectif de revêtement, que la préforme est revêtue d'un plusieurs autres composants dans une deuxième étape de procédé, et en ce que, dans une dernière étape du procédé, tous les composants sont mélangés à des températures inférieures à la température eutectique, mécaniquement et/ou par diffusion, dans une zone limite de la préforme revêtue de telle façon que le mélange reçoive dans une couche limite une structure eutectique ou proche de celle-ci, grâce à quoi, avant le processus de brasage lui-même, il est créé dans la brasure un état de phase, qui entraîne que toute la matière de brasure fond sans retard à une température immédiatement supérieure à la température eutectique lors du processus de brasage qui suit.

2. Procédé selon la revendication 2, caractérisé en ce que la deuxième étape du procédé est effectuée en même temps que la dernière.

3. Procédé de préparation d'une matière de brasure selon la revendication 1 ou 2, caractérisé en ce que le revêtmeent est effectué par placage ionique et que les composants sont mélangés par bombardement ionique dans la zone limite.

4. Procédé de fabrication d'une matière de brasure selon la revendication 1 ou 2, caractérisé en ce que le revêtement est réalisé par pulvérisation à haute puissance, les potentiels électriques de la source et du corps à revêtir étant différents.

5. Procédé de fabrication d'une matière de brasure selon la revendication 1 ou 2, caractérisé en ce que le revêtement est réalisé à l'aide d'un procédé CVD en formant une zone d'interdiffusion dans la zone de surface.

6. Procédé de fabrication d'une matière de brasure selon l'une des revendications 1 à 5, caractérisé en ce que, parmi deux préformes à relier l'une à l'autre, en particulier parmi des préformes à surface de brasure de forme compliquée, l'une d'elles se compose d'une matière correspondant au premier composant de la matière de brasure, qui est revêtu d'un ou plusieurs autres composants.

7. Procédé de fabrication d'une matière de brasure selon l'une des revendications 1 à 6, caractérisé en ce que l'on utilise comme composant de la matière de brasure des métaux de transition Ti, Zr, Hf, V, Nb, Ta, Cr, Mo et tungstène l'un au-dessous de l'autre, ou l'un ou plusieurs de ces métaux avec l'un ou plusieurs des métaux précieux Ag, Au, Ru, Rh, Pd, Os, Ir et/ou Pt et/ou des métaux ferreux Fe, Ni et Co.

8. Matière de brasure selon l'une des revendications 1 à 6 caractérisée en ce que le premier composant de la matière de brasure est du zirconium, que le second composant est du molybdène et que les deux composants sont en proportion de 71/29.

9. Matière de brasure selon l'une des revendications 1 à 5 et 7 à 8, caractérisée en ce que le premier composant de la matière de brasure est une feuille mince, autoporteuse et ductile et en ce que les proportions de tous les composants dans la matière de brasure correspondent en somme à la composition eutectique.

**Claims**

1. Process for the manufacture of a multicomponent, congruent melting soldering material, in which a preform, which can be a soldering foil or wire or one of the two parts to be soldered itself, of a first component of the soldering material, is coated with one or more further components in such a way that in the subsequent soldering process the soldering material is converted into a homogeneous phase of eutectic composition with a component of a brittle phase, characterized in that the preform is placed in a coating apparatus and in a first process step is freed from possible oxide layers and/or impurities adhering to the surface by means of measures known in themselves and specific to the coating process concerned, that in a second process step the preform is coated with one or more other components, and that in a last process step in a boundary zone of the coated preform all components are mixed mechanically and/or by diffusion at temperatures below the eutectic temperature in such a way that the mixture receives eutectic or approximately eutectic structure, through which before the actual soldering process a phase state is created in the solder which in the ensuing soldering process causes the whole soldering material to melt without a time lag at a temperature immediately above the eutectic temperature.

2. Process according to claim 1, characterized in that the second process step occurs simultaneously with the last one.

3. Process for the manufacture of a soldering material according to claim 1 or 2, characterized in that the coating is carried out by means of ion coating and the components are mixed in the boundary zone by means of ion bombardment.

4. Process for the manufacture of a soldering material according to claim 1 or 2, characterized in that the coating is carried out by means of high-power sputtering with different electrical potential between source and body to be coated.

5. Process for the manufacture of a soldering material according to claim 1 or 2, characterized in that the coating is carried out by a chemical vapour deposition process with formation of an interdiffusion zone in the surface region.

6. Process for the manufacture of a soldering material according to one of claims 1–5, characterized in that one of two preforms to be joined together, especially of preforms with soldering surfaces of complicated shape, consists of a material corresponding to the first component of the soldering material, which is coated with one or more further components.

7. Process for the manufacture of a soldering material according to claim 1–6, characterized in that as components of the soldering material the transition metals Ti, Zr, Hf, V, Nb, Ta, Cr, Mo and W are used among themselves or one or more of these metals are used with one or more of the noble metals Ag, Au, Ru, Rh, Pd, Os, Ir and/or Pt and/or the iron metals Fe, Ni and Co.

8. Soldering material according to one of claims 1–6, characterized in that the first component of the soldering material consists of zirconium and the second component of molybdenum and the two components are present in the weight ratio 71/29.

9. Soldering material according to claim 1–5 and 7–8, characterized in that the first component of the soldering material is a thin, self-supporting and ductile foil and the proportions of all components in the soldering material in total correspond to the eutectic composition.